Europäisches Patentamt

European Patent Office

Office européen des brevets

(11) Publication number: **0 183 306**
**B1**

## (12) EUROPEAN PATENT SPECIFICATION

(45) Date of publication of patent specification: **15.03.89**

(21) Application number: **85201847.2**

(22) Date of filing: **12.11.85**

(51) Int. Cl.⁴: **F 16 D 65/28, B 60 T 17/08**

(54) A parking brake arrangement for a rail vehicle brake unit.

(30) Priority: **19.11.84 SE 8405793**

(43) Date of publication of application:
**04.06.86 Bulletin 86/23**

(45) Publication of the grant of the patent:
**15.03.89 Bulletin 89/11**

(84) Designated Contracting States:
**DE FR GB IT**

(56) References cited:
**DE-A-3 238 606**
**FR-A-1 567 818**
**FR-A-2 304 831**
**FR-A-2 343 632**
**GB-A-1 022 132**
**GB-A-1 022 134**
**GB-A-1 136 670**
**GB-A-1 202 501**

(73) Proprietor: **SAB NIFE AB**
**Box 515**
**S-261 24 Landskrona (SE)**

(72) Inventor: **Nilsson, Bo Sten Ake**
**Odengatan 52**
**S-241 00 Eslöv (SE)**
Inventor: **Ljung, Krister Egil**
**Leifs väg 27**
**S-237 00 Bjärred (SE)**

(74) Representative: **Petri, Stellan et al**
**c/o SAB NIFE AB Box 515**
**S-261 24 Landskrona (SE)**

Courier Press, Leamington Spa, England.

## Description

### Technical field

This invention relates to a parking brake arrangement for a rail vehicle brake unit, comprising a parking brake member provided with a shoulder and movable in a brake force applying direction concurrently with a force delivering push rod of the unit, which is prvided with a fixed mounting bracket at each side.

### Background of the invention

Normally, a vehicle provided with a brake unit for each wheel, brake disc or axle also needs a parking brake ararngement, which may be combined with one or more of the brake units on the vehicle.

It is desirable to have a parking brake arrangement which is as simple and efficient as possible, only gives balanced forces on the unit, and does not require any special reference point for its proper function.

### The invention

This is according to the invention attained by a parking brake arrangement of the kind defined above, in which two generally co-directional parking brake levers are pivotally attached to each mounting bracket at a common pivot point, whereby two levers extend past the pivot point and are joined by a roller for abutting the shoulder, whereas the two other levers only extend to the pivot point and are joined by a roller for abutting the shoulder, the distance between the respective rollers and the pivot point being the same.

### Brief description of the drawing

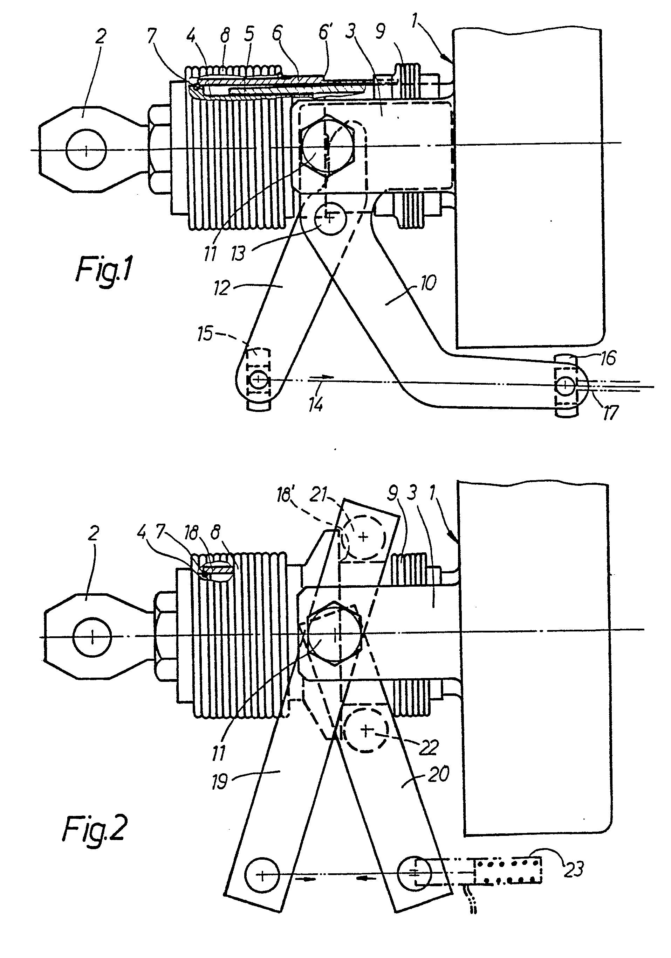

The invention will be described in further detail below reference being made to the accompaning drawing, in which Figures 1 and 2 are side-views (partly in section) showing a rail vehicle brake unit with two embodiments of a parking brake arrangement, of which the one shown in Figure 2 is according to the invention.

### Description of a preferred embodiment

A conventional brake unit 1 comprises—as is well known in the art—a brake cylinder and a slack adjuster built together as a self-contained unit. Its outgoing push rod 2 is to be attached to parts of a rail vehicle brake rigging (not shown), and the unit itself is to be mounted to the underframe or bogie of the vehicle by means of mounting brackets 3 on the unit (usually one bracket at each side of the unit).

In the sectioned part of Figure 1 a member 4 of the slack adjuster mechanism is shown. This member 4 is axially movable (concurrently with the push rod 2) to the left in the drawing guided by a fixed housing 5 of the unit 1 at a brake application operation under the action of brake fluid admitted to the cylinder of the unit.

For the purpose of accomplishing a parking brake arrangement for the unit a parking brake sleeve 6 is slidably arranged on the fixed housing 5 and is intended to actuate the slack adjuster member 4 in the brake application direction over a locking ring 7 thereon. A first flexible bellows 8 is arranged between a member on the push rod 2 and the sleeve 6 and a second one 9 between the sleeve 6 and the housing 5, both for the purpose to prevent the intrusion of dirt, moisture and the like.

In the embodiment shown in Figure 1, which is a basic design and forms no part of the invention, a fixed parking brake bracket 10 is attached to each mounting bracket 3 by means of a screw 11, which can also be used for the mounting of the unit to the vehicle underframe or bogie. By its shape (indicated with dashed lines in the drawing) the parking brake bracket 10 is held stationary to the unit by the screw 11.

A parking brake lever 12 is pivoted at 13 to each bracket 10 and abuts a shoulder 6' on the parking brake sleeve 6 with its upper end (as viewed in the drawing). At its lower end the lever 12 may be actuated by a pulling force (in the direction indicated by an arrow) in a wire 14 or the like attached to an attachment 15 between the two levers 12. A similar attachment 16 can be arranged between the ends of the parking brake brackets 10 and serves as a support for a Bowden cable 17 to which the wire 14 belongs.

By means of the arrangement described above and shown in Figure 1 a pulling force in the wire 14 is transformed into a pushing force in the push rod 2, and the force amplification depends on the length relationship between the two arms of the lever 12. (In the shown example the amplification will be 2).

The inventive embodiment shown in Figure 2 differs from the basic one according to Figure 1 in some important respects, but the unit 1 itself with the push rod 2, the mounting brackets 3 and the slack adjuster member 4 are the same in both versions. Also in Figure 2 two bellows 8 and 9 are shown.

In the same manner as the Figure 1, version a parking brake sleeve 18 is slidably mounted on the tubular housing (not shown) of the unit 1 and is provided with a comparatively large shoulder 18'. In this case two parking brake levers 19 and 20 are pivotally mounted to each bracket 3 by means of a screw 11 (which also is used for the mounting of the unit to the vehicle). The levers 19 extend past the pivot point 11 and are there joined by a roller 21 or the like, whereas in a corresponding way a roller 22 connects the two levers 20 at a distance below the pivot point 11 corresponding to the distance to the roller 21 upwards from the pivot point. The rollers 21 and 22 cooperate as shown in Figure 2 with the shoulder 18', and it is obvious that by urging the ends of the levers 19 and 20 together—as indicated by the arrows—the rollers 21 and 22 will apply a balanced force on the shoulder 18', resulting in a brake applying push force in the push rod 2. In the shown case, where the length ratio between the two parts of the respective lever 19 and 20 is 2.5, a total force amplification of 5 times is attained.

Many ways of practically accomplishing counteracting forces on the ends of the levers 19 and 20 are conceivable. Only one possibility is indicated in Figure 2. A fluid operated pulling cylinder 23 may be connected with its housing to lever 20 and with its piston rod to lever 19. Also a wire arrangement to the side of the vehicle is possible in a corresponding manner as is shown in Figure 1.

It is to be noted that the difference between units with and without parking brake arrangements is very slight and that a modification of a unit without parking brake to one with a parking brake is easy and cheap. Thus the outer levers and other members as described are easily mountable on the existing mounting brackets 3 without modifications.

## Claim

A parking brake arrangement for a rail vehicle brake unit (1), comprising a parking brake member (18) provided with a shoulder (18') and movable in a brake force applying direction concurrently with a force delivering push rod (2) of the unit, which is provided with a fixed mounting bracket (3) at each side, characterized in that two generally co-directional parking brake levers (19, 20) are pivotally attached to each mounting bracket (3) at a common pivot point (11), whereby two levers (19) extend past the pivot point and are joined by a roller (21) for abutting the shoulder (18'), whereas the two other levers (20) only extend to the pivot point and are joined by a roller (22) for abutting the shoulder, the distance between the respective rollers and the pivot point being the same.

## Patentanspruch

Parkbremsanordnung für eine Schienenfahrzeugbremseinheit (1) mit einem Parkbremselement (18), das mit einer Schulter (18') versehen ist und in die eine Bremskraft anlegende Richtung zusammen mit einer eine Kraft liefernden Schubstange (2) der Einheit bewegbar ist, die mit einem festen Montageträger (3) auf jeder Seite versehen ist, dadurch gekennzeichnet, daß zwei etwa in die gleiche Richtung verlaufende Parkbremshebel (19, 20) schwenkbar an jedem Montageträger (3) an einem gemeinsame Anlenkpunkt (11) angebracht sind, wobei zwei Hebel (19) sich über den Anlenkpunkt hinaus erstrecken und durch eine Rolle (21) zum Anstoßen an die Schulter (18') verbunden sind, während sind die beiden anderen Hebel (20) nur bis zum Anlenkpunkt erstrecken und durch eine Rolle (22) zum Anstoßen an die Schulter verbunden sind und der Abstand zwischen den jeweiligen Rollen und dem Anlenkpunkt der gleiche ist.

## Revendication

Agencement de frein de stationnement pour une unité de frein (1) de véhicule ferroviaire, comprenant un élément (18) de frein de stationnement muni d'un épaulement (18') et mobile dans le sens d'application d'une force de freinage, simultanément à une tige (2) de poussée exerçant une force et faisant partie de l'unité qui comporte une console fixe (3) de montage sur chaque côté, caractérisé en ce que deux leviers (19, 20) de frein de stationnement, globalement de même direction, sont reliés de façon pivotante à chaque console (3) de montage, en un point commun (11) d'articulation, de manière que deux leviers (19) s'étendent au-delà du point d'articulation et soient joints par un galet (21) destiné à être placé en butée avec l'épaulement (18'), tandis que les deux autres leviers (20) ne s'étendent que jusqu'au point d'articulation et sont joints par un galet (22) destiné à être en butée avec l'épaulement, la distance entre les galets respectifs et le point d'articulation étant la même.

Fig.1

Fig.2